Europäisches Patentamt

European Patent Office

Office européen des brevets

(19)

(11) Publication number: 0 275 050
A2

# EUROPEAN PATENT APPLICATION

(21) Application number: 88100201.8

(22) Date of filing: 08.01.88

(51) Int. Cl.⁴ C04B 41/84 , C04B 41/89

(30) Priority: 08.01.87 US 1791

(43) Date of publication of application:
20.07.88 Bulletin 88/29

(84) Designated Contracting States:
ES FR

(71) Applicant: KOHLER CO.
44 High Street
Kohler Wisconsin 53044(US)

(72) Inventor: Whitworth, Charles R.
Route No. 3 Oak Road
Plymouth Wisconsin 53073(US)
Inventor: Mooney, John F.
1400 Green Street
Perkasie Pennsylvania 18944(US)

(74) Representative: Baille, Iain Cameron et al
c/o Ladas & Parry Isartorplatz 5
D-8000 München 2(DE)

(54) Organic surface coatings with improved adhesion for clay plumbing fixtures.

(57) A clay plumbing fixture (1) comprising a fired clay body (5) with a vitreous glaze (6) over a surface thereof and a coating system of either (a) a primer coating (10) over the glaze (6) and an organic polymeric topcoating (11) over the primer coating (10) or (b) an organic polymeric topcoating (11) over the glaze (6). The primer coating (10) of coating system (a) or the topcoating (11) of coating system (b) contains a compatible silane compound to improve adhesion of the topcoating under wet service conditions. The topcoating (11) of either coating system (a) or (b) can have a selected color.

EP 0 275 050 A2

## ORGANIC SURFACE COATINGS WITH IMPROVED ADHESION FOR CLAY PLUMBING FIXTURES

This invention relates generally to the manufacture of clay plumbing fixtures; more specifically, this invention relates to systems for the improvement of the adhesion of organic surface coatings to plumbing fixtures made of vitreous china or sanitary fireclay.

Various plumbing fixtures are made of clay, including for example, lavatories, toilets, urinals, bidets, sinks and drinking fountains. These types of plumbing fixtures are commonly manufactured from two different kinds of clay formulations or "body", vitreous ware or semivitreous ware.

Vitreous ware is a typical whiteware clay body which contains ball clays, china clays, flint or quartz, and a flux such as feldspar or nephelen seyenite. The body is usually fired to about 1200°C (undergoing substantial shrinkage in the process) to give a dense (1% water absorption) strong body which is held together by a substantial amount of vitreous (glassy) phase. Typical manufacturing operations include the addition of an opaque glaze coat (powdered glass) about 0.5 mm thick which is sprayed over the article before the part is fired. The glaze may be applied prior to initial firing in a one-step firing process or it may be sprayed over an article which has already been fired in a two-step process.

Semivitreous ware, on the other hand, is made from naturally occurring fireclays with the addition of a grog which is usually a calcined crushed fireclay. This combination produces a clay body with low firing shrinkage but results in a somewhat porous body. To seal off the body, it is first coated with a thin layer of white-burning body known as an "engobe", and then covered with an opaque glaze. Semivitreous ware is a much thicker and heavier product than vitreous ware, and is more frequently specified for service conditions which are much more severe than those found in the home.

One of the problems inherent in the production of clay plumbing fixtures is the expense of repairing manufacturing defects. Due to the nature of clay itself and the firing conditions utilized to manufacture plumbing fixtures from clay, it is typically found that a significantly large percentage of the fixtures have derects which render them unsalable. It is not uncommon, for example, to have reject rates of 25% to 50%. Repair of defects in whiteware typically requires grinding away the defective site followed by application of additional ceramic material to bring the surface back to its glossy state. The whole piece must then be refired to temperatures in the range of about 1150°C to melt the glaze, causing it to flow evenly over the surface of the part. Sometimes, more than one refiring may be required in order to produce an acceptable product. This type of repair technique is quite expensive in view of the manhours necessary to make the repairs, which can often take from 1 to 3 days, and because of the high energy costs incurred in refiring the fixtures after the repairs have been made.

Another problem involved in the manufacture of clay plombing fixtures relates to the production of colored fixtures. Clay fixtures typically are now colored by the glaze coat, which can include various types of materials to provide colored fixtures. This has several disadvantages. There are only a limited range of colors that can be obtained with glazes. Further, a considerable amount of time is required to develop new glaze colors. Also, when the two-step manufacturing process described above is used, there is a significant energy cost due to the high temperatures at which a glaze must be fired.

An easy answer to the foregoing problems would seem to be to use an organic polymer coating on clay plumbing fixtures. Several types of coatings would appear suitable, such as coatings compounded with urethane, acrylic or epoxy polymers. However, we do not know of an organic polymer coating that can be applied to clay plumbing fixtures even with an appropriate primer, and exhibit acceptable adhesion to the fixtures under the wet service conditions to which they are normally subjected. A toilet must hold water constantly throughout its useful life; sinks and lavatories must hold water for short periods of time and must have a long service life. We are not aware of an organic polymer coating for clay plumbing fixtures that can retain its adhesion to clay fixtures under these service conditions.

The principal objective of the research and development program that culminated in the present invention was to provide a coating system for clay plumbing fixtures that could (1) reduce the cost of repairing defective fixtures, and (2) obviate the use of glaze as a colored topcoating for clay plumbing fixtures with or without defects. Recognizing the potential of organic polymer coatings for meeting these objectives but also being aware of their inability to do so, another principal objective was to improve the adhesion of organic polymer coatings to clay plumbing fixtures to an extent sufficient to render them, for the first time as far as we are aware, suitable for use as a topcoating for such fixtures.

Our present invention provides clay plumbing fixtures comprising a fired clay body with a vitreous glaze over a surface thereof characterized in that the fixtures include an organic coating system consisting of (a) a primer coating over the vitreous glaze and an organic polymeric topcoating over the primer coating, or (b) an organic polymeric topcoating over the vitreous glaze; and a silane compound mixed with the primer

2

coating in coating system (a) and compatible therewith or mixed with the organic polymeric topcoating in coating system (b) and compatible therewith.

The present invention is described by reference to the following drawings, in which:

Fig. 1 is a perspective view of an exemplary clay plumbing fixture, a toilet, to illustrate the type of article with which the coating systems of the present invention may be used;

Fig. 2 is a sectional view along the plane of line a-a of a portion of the toilet of Fig. 1 illustrating a typical prior art fixture construction;

Fig. 3 is a sectional view, also along the plane of line a-a, of a portion of the fixture of Fig. 1, corresponding to the sectional view of Fig. 2, illustrating one form of coating system of the present invention;

Fig. 4 is a sectional view, also along the plane of line a-a, of a portion of the fixture of Fig. 1, corresponding to the sectional views of Figs. 2 and 3, illustrating a second form of coating system of the present invention.

Fig. 5 is a bar graph illustrating the results of the accelerated water immersion tests of the samples of Examples 1-6 and the control samples tested therewith;

Fig. 6 is a bar graph illustrating the results of the accelerated water immersion tests of the samples of Examples 7-12 and the control samples tested therewith;

Fig. 7 is a bar graph illustrating the results of the accelerated water immersion tests of the samples of examples 13-18 and the control samples tested therewith;

Fig. 8 is a bar graph illustrating the results of the accelerated water immersion tests of the samples of Examples 19-24 and the control samples tested therewith;

Fig. 9 is a bar graph illustrating the results of the accelerated water immersion tests of the samples of Examples 25-30 and the control samples tested therewith; and

Fig. 10 is a bar graph illustrating the results of the accelerated water immersion tests of the samples of Examples 31-36 and the control samples tested therewith.


## Description of Preferred Embodiments

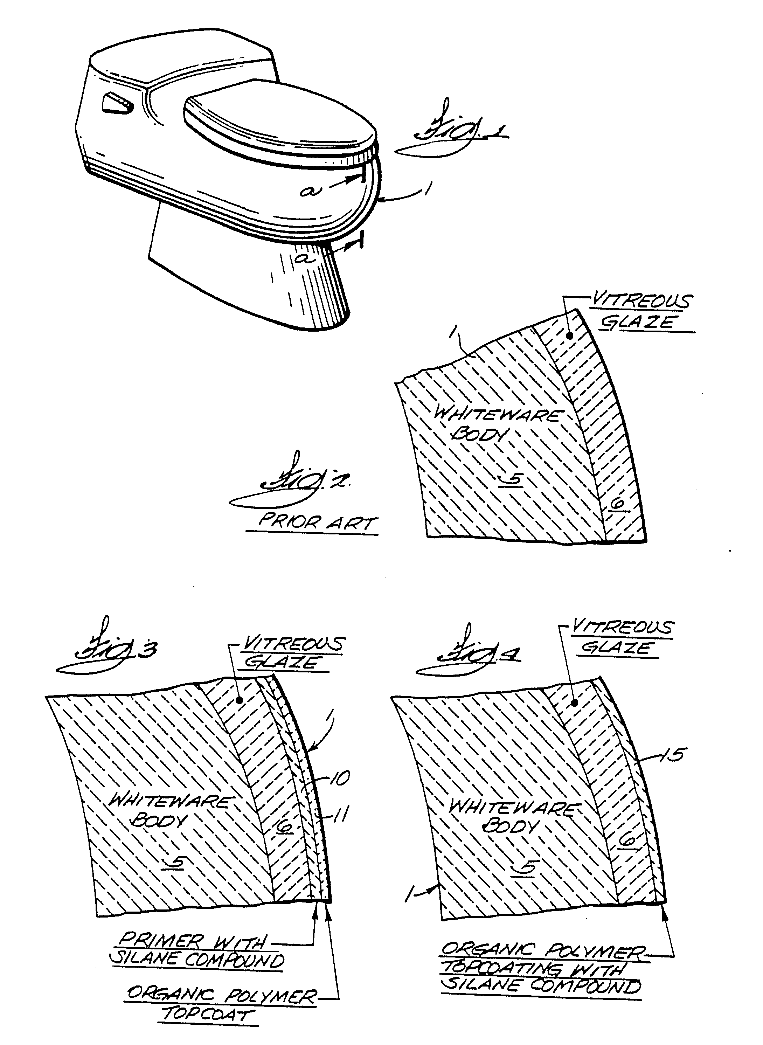

Fig. 1 illustrates a toilet 1 as an example of one of the many types of plumbing fixtures with which the present may be employed. The toilet 1 is of the type integrating a closet bowl and flush tank into a pleasing contemporary design. It should be borne in mind, however, that the toilet 1 is exemplary and the present invention can be employed with other types of clay plumbing fixtures.


### (a) Prior Art.

Fig. 2 is a sectional view taken along the plane of line a-a of Fig. 1 to illustrate the manner in which the toilet 1 is constructed in accordance with prior art techniques. The fixture consists of a whiteware body 5, typically of vitreous ware, and a vitreous glaze 6 over the exterior surfaces of the body. The glaze normally consists of a thin layer of glass or glass and crystals fired onto the surface of the body. In a typical manufacturing process, the body is first molded from the whiteware clay, the green body is then sprayed with glaze on the selected surfaces, and thereafter the fixture is fired in a kiln at the appropriate temperature. The glaze may also be applied after the body has been fired if a two-step process is used for manufacture of the fixture.

One of the problems prevalent in the manufacture of clay plumbing fixtures is that a defect in the fired glaze coating can lead to expensive repair procedures or often rejection of the entire fixture. The glaze is intended to put a glossy colored coating on the china body. If the glaze should become cracked, dulled or otherwise damaged during firing, the piece must be repaired or discarded. As described previously, the repair involves grinding away the defective site, applying additional glaze, and then refiring the piece so as to obtain a uniform glossy coat.

Another problem encountered with the prior art construction is that glazes typically offer a limited palette of colors for the manufacturer. It is difficult to formulate glazes in the broad range of colors now demanded by consumers, especially with unique colors which have only a limited demand. Thus the plumbing fixture manufacturer is restricted by the colors of glazes available.

(b) Present Invention.

Fig. 3 illustrates a cross section of the toilet 1 also along the plane of line a-a of Fig. 1 when made in accordance with the present invention. In this first embodiment, whiteware body 5 is covered along one surface with glaze 6, but in addition, a primer coating 10 is applied over the exterior surface of the glaze and an organic polymeric topcoatinq 11 is applied over the primer coating 10. According to the first coating system of this invention, the primer coating 10 includes a silane compound which will be demonstrated by the Examples presented below to enhance the adhesion of the organic polymer topcoating to the primer.

Fig. 4 illustrates a second coating system of this invention, also representing a cross section along the plane of line a-a of the toilet of Fig. 1 when made according to this invention. In Fig. 4, whiteware body 5 is coated with glaze 6 along one surface, and an organic polymer topcoating 15 is applied over an exterior surface of the glaze 6. In this second embodiment, moreover, the organic polymer topcoating 15 includes a silane compound, and it will be demonstrated in the following Examples that the organic topcoating blended with silane shows improved adhesion to the fixture. Thus, in contrast to the embodiment of Fig. 3, a primer layer is not included in the embodiment of Fig. 4.

The organic topcoatings suitable for the practice of this invention are various commercially-available coatings that can produce a weather and abrasion resistant coating, preferably a glossy coating. Useful organic topcoatings are those including an acrylic, alkyd, urethane or epoxy polymer, or a copolymer of one or more of the foregoing such as a urethaneacrylic, urethane-alkyd, acrylic-urethane or acrylic-acrylamide copolymer. Organic topcoatings of these types are available from a number of companies, who do not disclose the specific composition of their products, such as PPG Industries (PPG), E. I. DuPont de Nemours and Company duPont), Sherwin Williams (SW) and Peterson Chemical Corp. (PC). The following lists a number of suitable topcoatings identified by generic type, supplier and applicable tradename.

| Type | Supplier | Tradename |
|---|---|---|
| Urethane | PPG | Durethane |
| Urethane | duPont | Imron |
| Urethane | SW | Polane |
| Acrylic | PPG | Duracryl |
| Acrylic | PPG | Delstar |
| Urethane-acrylic | PPG | Delstar/D |
| Acrylic-urethane | PPG | Deltron |
| Alkyd | PPG | Ditzco |
| Urethane-alkyd | PPG | Ditzco |
| Epoxy | PC | Petrach |

The primer coating, when used, should be of a composition compatible with the selected topcoating. An epoxy primer coating, is compatible with many of the topcoatings described above. However, the primer coating should be selected in accordance with the recommendations or the supplier of a specific topcoating.

The silanes to be added to the topcoatings and/or the primer coating in accordance with the present invention are trialkoxysilane compounds, especially trimethoxysilane and triethyoxysilane compounds. The trimethoxysilane compounds have the general type formula $R\text{-}(CH_2)_n\text{-}Si(OCH_3)_3$ and the triethoxysilane compounds have the general type formula $R\text{-}(CH_2)_n\text{-}Si(OC_2H_5)_3$. R-can be a saturated or unsaturated aliphatic or cycloaliphatic radical and can include substituent groups such as epoxy, acrylate, amine, mercapto, styryl or chloro groups. "n" in the type formulae can be 0 or an integer from 1 to 6. The following lists a representative number of useful silanes by their respective formula. Each silane is identified by a reference letter that will be used in the Examples which follow to designate the silane used in a specific coating formulation.

| Designation | Chemical Structure |
|---|---|
| Silane A | $CH_2=CHSi(OCH_3)_3$<br>Vinyltriacetoxysilane |
| Silane B | $ClCH_2CH_2CH_2Si(OCH_3)_3$<br>gamma-chloropropyltrimethoxysilane |
| Silane C | $CH_2CHCH_2OCH_2CH_2CH_2Si(OCH_3)_3$<br>gamma-glycidoxypropyltrimethoxysilane |
| Silane D | $CH_2=C$- $COOCH_2CH_2CH_2Si(OCH_3)_3$, with $CH_3$ branch<br>methacryloxypropyltrimethoxysilane |
| Silane E | $H_2NCH_2-CH_2CH_2Si(OC_2H_5)_3$<br>gamma-aminopropyltriethoxysilane |
| Silane F | $H_2NCH_2CH_2NHCH_2CH_2CH_2Si(OCH_3)_3$<br>N-aminoethylaminopropyltrimethoxysilane |
| Silane G | $HSCH_2CH_2CH_2Si(OCH_3)_3$<br>gamma-mercaptopropyltrimethoxysilane |
| Silane H | $CH_2=CHC_6H_4NHCH_2CH_2NH(CH_2)_3Si(OCH_3)_3$<br>vinylbenzylaminesilane |
| Silane I | $-CH_2CH_2Si(OCH_3)_3$<br>cycloaliphaticepoxidesilane |

Silanes are commercially-available from a number of suppliers.
The following lists several suppliers for silanes identified above. Three suppliers are identified as follows: DC = Dow Corning, UC = Union Carbide and KF = Kay-Fries.

Silane A ---(1) DC Z6075, (2) UC A172, (3) KF VTMO, (4) Petrach V4910.
Silane B ---(1) DC Z6076, (2) UC C3292 & C3300, (3) KF CPTMO.
Silane C ---(1) DC Z6040, (2) UC A187, (3) KF GLYMO.
Silane D ---(1) DC Z6030, (2) UC A174, (3) KF MEMO.
Silane E ---(1) DC Z6026, (2) UC A1100-2, (3) KF AMEO, (4) Isochem A-11.
Silane F ---(1) DC Z6020, (2) UC A1120, (3) KF DAMO.
Silane G --(1) DC Z6062, (2) UC A189, (3) KF MTMO.
Silane H ---(1) DC Z6032, (2) UC A186, (3) Petrach S1590.
Silane I ---(1) Petrach E6250.

Only a small amount of the silane compound needs to be added to the primer coating or the topcoating. Thus, the primer coating or topcoating need contain only at least about 0.25% to 5% by weight of silane compound, with about 0.5% to 2% by weight of silane being effective for most coating systems. The various coating systems reported in the Examples include 0.5% by weight of silane compound so as to maintain the same concentration for all of the Examples.

Examples 1-36 report on a series of tests conducted to investigate the efficacy of the concepts of the present invention. The following test procedure was employed for the Examples.

Test samples consisting of glazed vitreous whiteware tiles were cleaned with a wax and grease remover and wiped dry. The tiles were spray coated with a primer over the glazed surface and a topcoating sprayed over the primer in Examples 1-6, 13-18 and 25-30; the tiles of Examples 7-12, 19-24 and 31-36 were spray coated with a topcoating only over the glazed surface. The primer and topcoating compositions are indentified in the Examples. Control specimens were made up for each primer-topcoating combination or topcoating presented in the Examples.

An aluminum dollie 310 mm² 0.48sq. inches in area (Pacific Scientific part #2040) was adhered to the topcoating of each tile using a 0.12-0.15 mm thick layer of resin adhesive (Permabond 612 acrylic structural adhesive). All tiles were let stand at room temperature for 16 to 24 hours. Thereafter, the tiles were subjected to two accelerated water immersion tests:

Water Immersion Test I:    the tiles were immersed in deionized water at 35°C. for 100 hours.
Water Immersion Test II:    the tiles were immersed in deionized water at 60°C. for

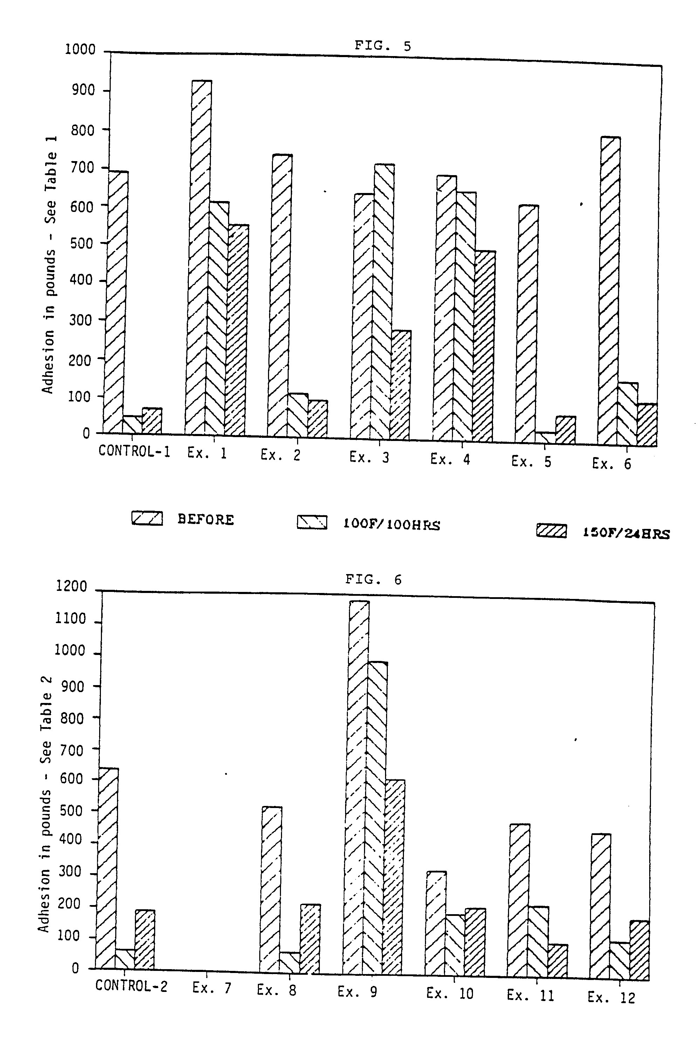

The adhesion of the topcoating to a tile was measured by securing a tile in the test fixture of an Instron tensile tester, attaching the crosshead of the Instron to the dollie and then running the crosshead to find the force at which the bond between the tile and the topcoating was broken, which is the yield point. This is a measure of the adhesion strength of the topcoatings. The topcoating adhesion strength was measured in this fashion before and after the two Water Immersion Tests. The results reported in Tables 1-6 and in the respective drawings of Figs. 5-10 represent the average of three samples for each Example and each Control sample except where noted in the Tables.

Example 1

Glazed vitreous tiles were spraycoated with an epoxy primer (Deltron DP-40) containing 0.5% by weight of silane F. After the primer was dry, an acrylic-urethane topcoating ((DAU)-Deltron) was sprayed over the primer. The adhesion of the topcoating was measured after drying, after Water Immersion Test I and after Water Immersion Test II.

Example 2

The procedure of Example 1 was repeated except that the silane mixed with the primer was silane D.

Example 3

The procedure of Example 1 was repeated except that the silane mixed with the primer was silane H.

Example 4

The procedure of Example 1 was repeated except that the silane mixed with the primer was silane C.

Example 5

The procedure of Example 1 was repeated except that the silane mixed with the primer was silane A.

Example 6

The procedure of Example 1 was repeated except that the silane mixed with the primer was silane B.

Control-1

As a control for comparison with Examples 1-6, the procedure of Example 1 was repeated except that the primer did not include any silane compound.

The results of the measurements of topcoating adhesion for the test samples of Examples 1-6 and Control-1, determined as described previously, are listed in Table 1 and illustrated in the bar graph of Fig. 5.

The tiles of Examples 7-12 were prepared with the same topcoating as Examples 1-6 but with no primer coating under the topcoating.

Example 7

Glazed vitreous tiles were spraycoated with an acrylicurethane topcoating ((DAU)-Deltron) containing 0.5% silane F. There was no primer between the topcoating and the glazed surface of the tiles. It was noted that the silane F was not compatible with the topcoating so that the tiles were not further tested. This Example emphasizes the feature that the specific silane added to a particular coating must be compatible therewith.

Example 8

Glazed vitreous tiles were spraycoated with the topcoating of Example 7 containing 0.5% by weight of silane D. There was no primer between the topcoating and the glazed surface of the tiles. The silane was compatible with the topcoating. The adhesion of the topcoating was measured after drying, after Water Immersion Test I and after Water Immersion Test II.

Example 9

The procedure of Example 8 was repeated except that the silane mixed with the topcoating was silane H.

Example 10

The procedure of Example 8 was repeated except that the silane mixed with the topcoating was silane C.

Example 11

The procedure of Example 8 was repeated except that the silane mixed with the topcoating was silane A.

Example 12

The procedure of Example 8 was repeated except that the silane mixed with the topcoating was silane B.

## Control-2

As a control for comparison to Examples 7-12, the procedure of Example 8 was repeated except that the topcoating did not include any silane compound.

The results of the measurements of topcoating adhesion for the test samples of Examples 7-12 and Control-2, determined as described previously, are listed in Table 2 and illustrated in the bar graph of Fig. 6.

## Example 13

Glazed vitreous tiles were coated with a urethane primer (Polane HS) containing 0.5% by weight of silane F. After the primer was dry, a polyurethane topcoating (POLANE) was sprayed over the primer. It was found that silane F was incompatible with the topcoating, and the tiles therefore were not further tested.

## Example 14

Glazed vitreous tiles were coated with the urethane primer of Example 13 (Polane HS) containing 0.5% by weight of silane D. After the primer was dry, the polyurethane topcoating (POLANE) of Example 13 was sprayed over the primer. The adhesion of the topcoating was measured after drying, after Water Immersion Test I and after Water Immersion Test II.

## Example 15

The procedure of Example 14 was repeated except that the silane added to the primer was silane H.

## Example 16

The procedure of Example 14 was repeated except that the silane added to the primer was silane C.

## Example 17

The procedure of Example 14 was repeated except that the silane added to the primer was silane A.

## Example 18

The procedure of Example 14 was repeated except that the silane added to the primer was silane B.

## Control-3

As a control for comparison to Examples 13-18, the procedure of Example 14 was repeated except that no silane compound was added to the primer.

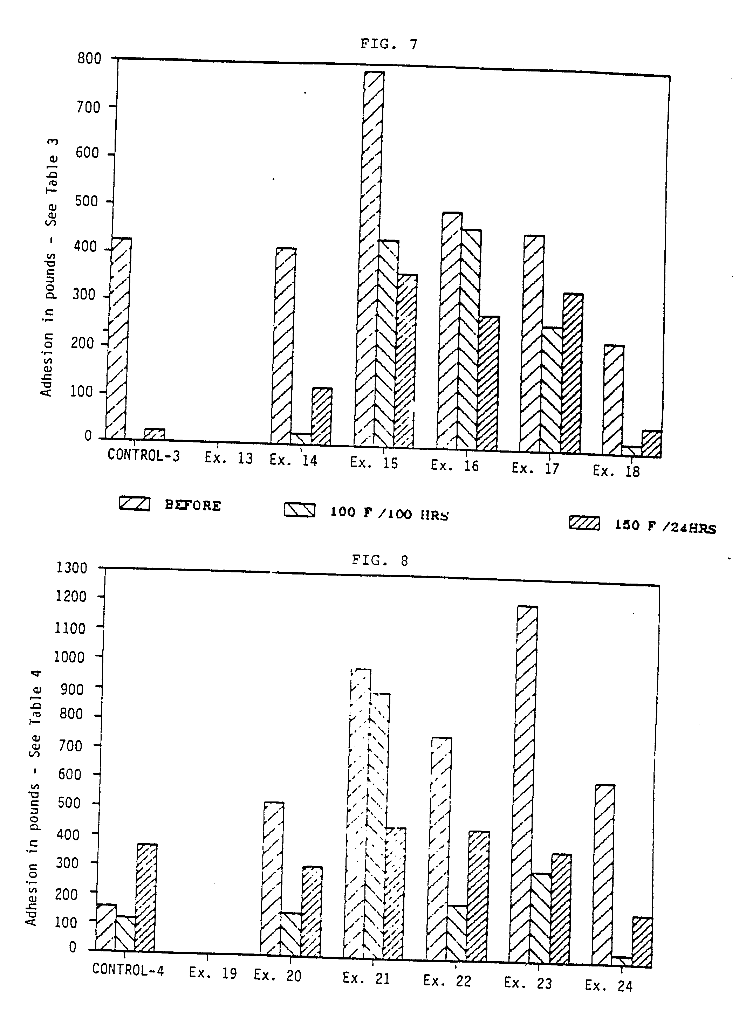

The results of the measurements of topcoating adhesion for the test samples of Examples 13-18 and Control-3, determined as described previously, are listed in Table 3 and illustrated in the bar graph of Fig. 7.

The tiles of Examples 19-24 and Control-4 were prepared with the same topcoating as in Examples 13-18 but with no primer coating under the topcoating.

8

### Example 19

The topcoating of Example 13 containing 0.5% by weight of silane F was sprayed onto the glazed surface of giazed vitreous tiles. There was no primer between the topcoating and the surface of the tiles. It was found that the silane F was not compatible with the topcoating, and the tiles were not subjected to any further testing.

### Example 20

The topcoating of Example 13 containing 0.5% by weight of silane D was sprayed onto the glazed surface of glazed vitreous tiles and dried. There was no primer between the topcoating and the surface of the tiles. The adhesion of the topcoating was measured after drying, arter Water Immersion Test I and after Water Immersion Test II.

### Example 21

The procedure of Example 20 was repeated except that the silane mixed with the topcoating was silane H.

### Example 22

The procedure of Example 20 was repeated except that the silane added to the topcoating was silane C.

### Example 23

The procedure of Example 20 was repeated except that the silane added to the topcoating was silane A.

### Example 24

The procedure of Example 20 was repeated except that the silane added to the topcoating was silane B.

### Control-4

As a control for comparison with Examples 19-24, the procedure of Example 20 was repeated except that the topcoating did not contain any silane compound.

The results of the measurements of topcoating adhesion for the test samples of Examples 19-24 and Control-4, determined as described previously, are listed in Table 4 and illustrated in the bar graph of Fig. 8.

### Example 25

Glazed vitreous tiles were coated with an epoxy primer (Corlar 824S) containing 0.5% by weight of silane F. The primer was applied to the glazed surface of the tiles. After the primer was dry, a polyurethane topcoating (IMRON) was sprayed over the primer. The adhesion to the topcoating was measured after drying, after Water Immersion Test I and after Water Immersion Test II.

9

## Example 26

The procedure of Example 25 was repeated except that the silane added to the primer was silane D.

## Example 27

The procedure of Example 25 was repeated except that the silane added to the primer was silane H.

## Example 28

The procedure of Example 25 was repeated except that the silane added to the primer was silane C.

## Example 29

The procedure of Example 25 was repeated except that the silane added to the primer was silane A.

## Example 30

The procedure of Example 25 was repeated except that the silane added to the primer was silane B.

## Control-5

As a control for comparison with Examples 25-30, the procedure of Example 25 was repeated except that the primer did not include any silane compound.

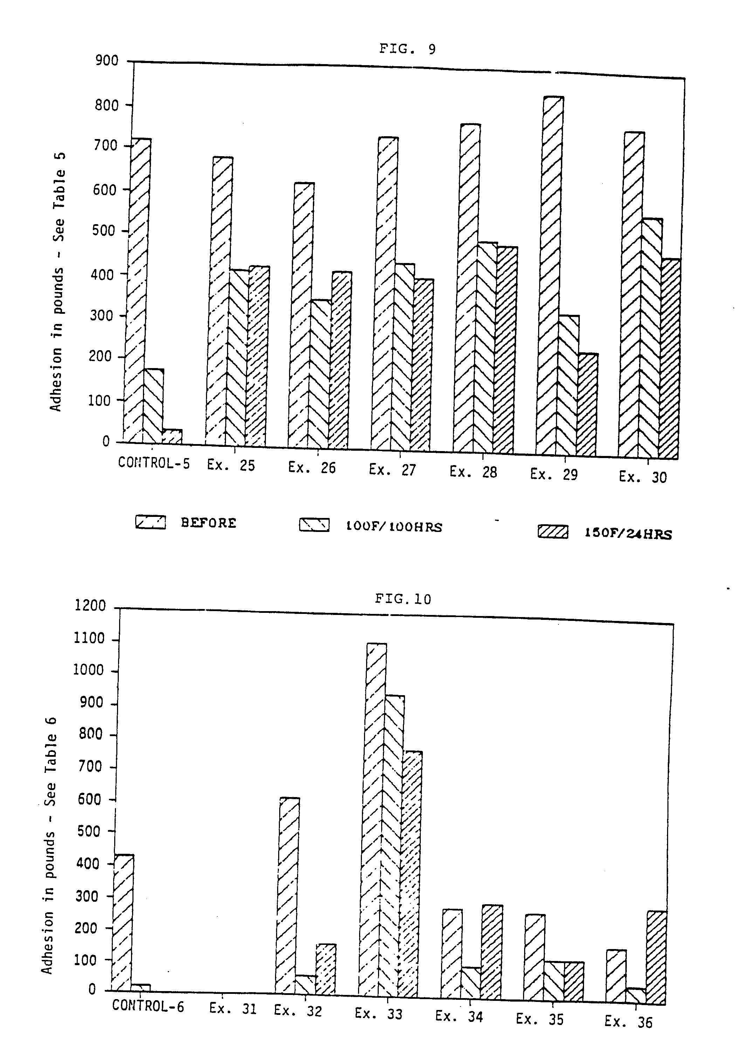

The results of the measurements of topcoating adhesion for the test samples of Examples 25-30 and Control-5, determined as described previously, are listed in Table 5 and illustrated in the bar graph of Fig. 9.

The tiles of Examples 31-36 and Control-6 were prepared with the same topcoating as in Examples 25-30 but with no primer coating under the topcoating.

## Example 31

The topcoating of Example 25 containing 0.5% by weight silane F was sprayed onto the glazed surface of glazed vitreous tiles. No primer was between the tile and the topcoating. It was noted that silane F was incompatible with the topcoating and the test samples underwent no further testing.

## Example 32

The topcoating of Example 25 containing 0.5% by weight of silane D was sprayed onto the glazed surface of glazed vitreous tiles. There was no primer coating between the tile surface and the topcoating. The adhesion of the topcoating was measured after drying, after Water Immersion Test I and after Water Immersion Test II.

## Example 33

The procedure of Example 32 was repeated except the silane added to the topcoating was silane H.

## Example 34

The procedure of Example 32 was repeated except that the silane added to the topcoating was silane C.

## Example 35

The procedure of Example 32 was repeated except that the silane added to the topcoating was silane A.

## Example 36

The procedure of Example 32 was repeated except that the silane added to the topcoating was silane B.

## Control-6

As a control for comparison with Examples 31-36, the procedure of Example 32 was repeated except that the topcoating did not contain any silane compound.

The results of the measurements of topcoating adhesion for the test samples of Examples 31-36 and Control-6, determined as described previously, are listed in Table 6 and illustrated in the bar graph of Fig. 10.

11

Table 1

| Test Samples | Adhesion in Kilograms | | |
| | After Drying | After Water Immersion Test I | After Water Immersion Test II |
|---|---|---|---|
| Control-1 | 314 Kg | 21 Kg | 31Kg |
| Ex. 1 | 423 | 378 | 252 |
| Ex. 2 | 337 | 536 | 45 |
| Ex. 3 | 292 | 328 | 132 |
| Ex. 4 | 316 | 297 | 227 |
| Ex. 5 | 284 | 14 | 33 |
| Ex. 6 | 369 | 75 | 51 |

NOTES:  (1) Bond separation at topcoating-primer interface in Examples 2, 3 and 6.
(2) Bond separation at primer-tile interface in Examples 1, 4 and 5.

Table 2

| Test Samples | Adhesion in Kilograms | | |
| | After Drying | After Water Immersion Test I | After Water Immersion Test II |
|---|---|---|---|
| Control-2 | 284 Kg | 29Kg | 91 Kg |
| Ex. 7 | -- | -- | -- |
| Ex. 8 | 238 | 31 | 101 |
| Ex. 9 | 536* | 450* | 880 |
| Ex. 10 | 151 | 89 | 99 |
| Ex. 11 | 221 | 102 | 48 |
| Ex. 12 | 207 | 54 | 85 |

NOTES:  (1) Bond separation at topcoating-tile interface in Examples 7-12.
*Data based on one tile, other tiles broke.

Table 3

| Test Samples | After Drying | Adhesion in Kilograms After Water Immersion Test I | After Water Immersion Test II |
|---|---|---|---|
| Control-3 | 227 Kg* | 0 | 11 Kg |
| Ex. 13 | -- | -- | -- |
| Ex. 14 | 188* | 10 Kg | 56 |
| Ex. 15 | 358* | 198 | 167 |
| Ex. 16 | 278* | 212 | 130 |
| Ex. 17 | 208* | 121 | 153 |
| Ex. 18 | 107* | 9 | 26 |

NOTES:   (1) Bond separation at topcoating-primer interface in Example 15.
(2) Bond separation at primer-tile interface in Examples 13, 14, 16-18.
* Average of two test samples.

Table 4

| Test Samples | After Drying | Adhesion in Kilograms After Water Immersion Test I | After Water Immersion Test II |
|---|---|---|---|
| Control-4 | 70Kg | 53 Kg | 167 Kg |
| Ex. 19 | -- | -- | -- |
| Ex. 20 | 276* | 66 | 139 |
| Ex. 21 | 445* | 409** | 203 |
| Ex. 22 | 343* | 85 | 201 |
| Ex. 23 | 549 | 139 | 171 |
| Ex. 24 | 281 | 14 | 76 |

NOTES:   (1) Bond separation at topcoating-tile interface.
* Average of two test samples.
** Measurement of one sample, other tiles broke.

0 275 050

Table 5

### Adhesion in Kilograms

| Test Samples | After Drying | After Water Immersion Test I | After Water Immersion Test II |
|---|---|---|---|
| Control-5 | 327Kg | 79Kg | 16Kg |
| Ex. 25 | 311 | 189 | 195 |
| Ex. 26 | 286 | 161 | 192 |
| Ex. 27 | 836 | 201 | 186 |
| Ex. 28 | 853 | 227 | 222 |
| Ex. 29 | 385 | 151 | 111 |
| Ex. 30 | 350 | 259 | 216 |

NOTES:   (1) Bond separation at primer-tile interface.

Table 6

### Adhesion in Kilograms

| Test Samples | After Drying | After Water Immersion Test I | After Water Immersion Test II |
|---|---|---|---|
| Control-6 | 194Kg | 10Kg | 0 |
| Ex. 31 | -- | -- | -- |
| Ex. 32 | 284 | 27* | 75Kg |
| Ex. 33 * | 504 | 431** | 354* |
| Ex. 34 | 130 | 46 | 138 |
| Ex. 35 | 126 | 58 | 58 |
| Ex. 36 | 78 | 23* | 135 |

NOTES:   (1) Bond separation at topcoating-tile interface.
* Average of two test samples.
** Measurement of one test sample, other tiles broke.

The data of Examples 1-36 establish the improved results obtainable with organic coating systems for clay plumbing fixtures in accordance with the present development.

14

With respect to the acrylic-urethane organic polymeric topcoating employed in Examples 1-12, it was found generally preferable to add a silane compound to the primer in the primer-topcoating systems of Examples 1-6 as compared to adding the silane to the topcoating systems without a primer as in Examples 712. It can be seen that addition of the silane to the primer increased the initial adhesion of the topcoating as compared to control-1 in Examples 1-6. There was enhancement of the adhesion of the topcoating in the water immersion tests as compared to the control in all of Examples 1-6; however, the silanes added in Examples 1, 3 and 4 provided the best protection against lost of adhesion when immersed in water and would be the silanes of choice for addition to the particular coating systems of these Examples. With respect to the coating systems of Examples 7-12, the silane of Example 9 provided dramatic improvement in results both initially and after water immersion, the systems of Examples 10 and 11 provided improved results with respect to water immersion and the compositions of Examples 8 and 12 were of lesser usefulness.

The data of Examples 13-18 show improved adhesion of the topcoating when the primer contained a silane compound as in Examples 14-18 in comparison to the control sample. Especially effective results were obtained with the silane of Example 15 added to the primer, and also with the silanes of Examples 16 and 17. The coating systems of Examples 14 and 18 provided a reduced degree of effectiveness. Examples 19-24 employed the same polyurethane topcoating as Examples 13-18, but no primer was used. Improved results were obtained with the compositions of Examples 20-23, and the composition of Example 24 provides improved initial adhesion but appeared to demonstrate reduced effectiveness when immersed in water as compared to the control.

Considering the data of Examples 25-30, it will be noted that all of the compositions provide substantially improved water resistance with respect to the adhesion of the polyurethane topcoating employed in these Examples. All Examples demonstrate improvements as compared to the control sample. When no primer was used with the same urethane topcoating in Examples 31-36, the composition of Example 33 was especially effective, and the compositions of Examples 32-36 show improvements to a more limited degree.

In connection with the Examples, it will be noted that most silane additions provide for improved results with respect to either initial adhesion or adhesion of the topcoating after water immersion. Thus the specific silane used with a particular topcoating coating system or topcoating and primer coating system should be selected with a view towards the adhesion characteristics required for the finished product. Some limited degree of testing such as described in the Examples may be helpful in order to ascertain the optimal system for a specific application.

The Examples also demonstrate the need that the particular silane selected for addition to a specific primer coating or specific topcoating should be compatible with the coating to which it is to be added. Compatibility as used herein means that the silane compound is to be fully dissolved or dispersed throughout the coating to which it is added and not form a discrete phase or other zone therein. Compatibility can be readily ascertained by those skilled in the art, and persons working with organic polymer coatings are a customed to ascertaining compatibility and will appreciate its importance.

There has thus been described new coating systems for application to the glazed surface of clay plumbing fixtures. The new coating systems enable use of organic polymeric topcoatings for glazed plumbing fixtures that can meet the rigorous use conditions of such fixtures, especially with respect to the need to maintain an adequate level of adhesion when subjected to water. The manufacturer of clay fixtures is now provided with two additional highly useful options. If a defective clay plumbing fixture is manufactured, with the defect in either the glaze or body of the fixture, the damaged area can be repaired with compounds such as epoxy filler material and the repaired surface can now be overcoated with a coating system according to the present invention. This eliminates the need to repair the fixture and then apply a new glaze over the surface of the fixture, and thereafter refire the fixture, as is the typical present prior art practice. The present invention thus provides efficacious and economical means to repair defective clay plumbing fixtures. Another significant use of the coating systems of the present development is the production of clay plumbing fixtures having colors not now attainable with glaze surfaces or which would be difficult to match by formulating new glaze coatings. The fixtures of this invention include an organic polymeric topcoating that can be readily colored in a large variety of colors using commercially available pigments. The manufacturer is now presented with a broader palette of colors for use in manufacturing clay plumbing fixtures. This is of utility if a large number of fixtures are desired to be produced in colors not presently available with glazes. An added advantage is that the manufacturer can now produce a limited number of colored clay plumbing fixtures in customized or unique colors that cannot be made with a glazed clay fixture.

The present invention has been described above by reference to certain specific Examples in order to enable these skilled in the art to practice its features and to set forth presently-preferred best modes for its practice. It is understood, however, that the claims are to be limited only by the scope of the prior art inasmuch as changes can be made to the exemplary embodiments by those of ordinary skill in the art upon learning the concepts of this invention that will remain within the scope and spirit of the claims.

## Claims

1. A clay plumbing fixture (1) comprising a fired clay body (5) with a vitreous glaze (6) over a surface thereof, characterized in that the fixture includes an organic coating system selected from the group consisting of (a) a primer coating (10) over the vitreous glaze (6) and an organic polymeric topcoating (11) over the primer coating (10), or (b) an organic polymeric topcoating (11) over the vitreous glaze (6); and a silane compound mixed with the primer coating (10) in coating system (a) and compatible therewith or mixed with the organic polymeric topcoating (11) in coating system (b) and compatible therewith.

2. A clay plumbing fixture (1) according to claim 1 characterized in that the topcoating (11) is an acrylic, alkyd, urethane, epoxy, or copolymer including one or more of the foregoing, polymeric coating.

3. A clay plumbing fixture (1) according to claim 1 or 2 characterized in that the silane compound is a trialkoxysilane compound.

4. A clay plumbing fixture (1) according to claim 1 or 2 characterized in that the silane compound is a trimethoxysilane compound or a triethoxysilane compound.

5. A clay plumbing fixture (1) according to claim 1 or 2 characterized in that the silane compound has the type formula

$R-(CH_2)_n-Si-(OR_1)3$

in which R is a saturated or unsaturated aliphatic or cylicloaliphatic radical, n is 0 or an integer from 1 to 6, and $R_1$ is a methyl or ethyl radical.

16

0 275 050

Fig. 1

Fig. 2
PRIOR ART

VITREOUS GLAZE
WHITEWARE BODY
5
6

Fig. 3

VITREOUS GLAZE
WHITEWARE BODY
10
6
11
5

PRIMER WITH SILANE COMPOUND

ORGANIC POLYMER TOPCOAT

Fig. 4

VITREOUS GLAZE
WHITEWARE BODY
15
6
5
1

ORGANIC POLYMER TOPCOATING WITH SILANE COMPOUND

FIG. 5

FIG. 6

0 275 050

FIG. 7

Adhesion in pounds – See Table 3

CONTROL-3   Ex. 13   Ex. 14   Ex. 15   Ex. 16   Ex. 17   Ex. 18

BEFORE    100 F /100 HRS    150 F /24HRS

FIG. 8

Adhesion in pounds – See Table 4

CONTROL-4   Ex. 19   Ex. 20   Ex. 21   Ex. 22   Ex. 23   Ex. 24

FIG. 9

Adhesion in pounds - See Table 5

CONTROL-5   Ex. 25   Ex. 26   Ex. 27   Ex. 28   Ex. 29   Ex. 30

BEFORE    100F/100HRS    150F/24HRS

FIG. 10

Adhesion in pounds - See Table 6

CONTROL-6   Ex. 31   Ex. 32   Ex. 33   Ex. 34   Ex. 35   Ex. 36